# EUROPÄISCHE PATENTSCHRIFT

(11) **EP 3 383 584 B1**
(45) Veröffentlichungstag und Bekanntmachung des Hinweises auf die Patenterteilung: **11.05.2022**
(21) Anmeldenummer: 16801384.5
(22) Anmeldetag: 24.11.2016
(51) Int. Cl.: B23Q 16/10

(54) **WERKZEUGREVOLVER**
TOOL TURRET
TOURELLE PORTE-OUTILS

(30) Priorität: 03.12.2015 DE 102015015855
(43) Veröffentlichungstag der Anmeldung: 10.10.2018
(73) Patentinhaber: Zeitfracht GmbH & Co. KGaA, 13627 Berlin (DE)
(72) Erfinder: GIESLER, Steffen, 72458 Albstadt (DE); BIRK, Kurt, 72760 Reutlingen (DE)
(74) Vertreter: Bartels, Martin Erich Arthur
(86) Internationale Anmeldenummer: PCT/EP2016/001978
(87) Internationale Veröffentlichungsnummer: WO 2017/092858

(56) Entgegenhaltungen:
- DE-A1- 4 308 419
- DE-U1- 29 900 908
- JP-A- 2004 025 376

## Beschreibung

Die Erfindung betrifft einen Werkzeugrevolver mit den Merkmalen im Oberbegriff von Anspruch 1.

Werkzeugrevolver dieser Art sind Stand der Technik, siehe DE 41 16 774 C1. Die Betriebssicherheit von mit derartigen Werkzeugrevolvern ausgerüsteten Werkzeugmaschinen ist in hohem Maße von der Funktionssicherheit der Verriegelung des Revolverkopfes abhängig. Die Sicherheit des Verzahnungseingriffs lässt insbesondere zu wünschen übrig, wenn für die Bewegung des Verriegelungsteils, das als Druckkolben ausgebildet ist, eine begrenzte Betätigungskraft zur Verfügung steht, weil beispielsweise für eine große wirksame Kolbenfläche des Verriegelungsteils, wie sie für eine pneumatische Betätigung zu fordern ist, kein ausreichender Bauraum zur Verfügung steht. Um trotz geringer Betätigungskraft bei begrenzter wirksamer Kolbenfläche eine sichere Verriegelung zu ermöglichen, sieht die genannte, bekannte Lösung eine spezielle Zahnform der Verzahnung vor, mit geringem Flankenwinkel und trapezförmiger Querschnittsform der Zähne. Diese Lösung lässt insbesondere deshalb noch Wünsche offen, weil die vorgesehene Zahnform die Sicherheit des Verzahnungseingriffs durch möglichen Kopf-auf-Kopf-Kontakt gefährdet.

Die DE 299 00 908 U1 beschreibt einen Werkzeugrevolver mit den Merkmalen im Oberbegriff von Anspruch 1 mit einem Gehäuse, einem relativ zum Gehäuse mittels eines Antriebes drehbaren Revolverkopf, zwei koaxial zur Drehachse des Revolverkopfes angeordneten Zahnkränzen, von denen der eine drehfest mit dem Revolverkopf und der andere drehfest mit dem Gehäuse verbunden ist, einem relativ zum Gehäuse und zum Revolverkopf axial bewegbaren Verriegelungsteil mit einer auf die beiden Zahnkränze ausgerichteten und in seiner Verriegelungsstellung mit diesen in Eingriff als formschlüssige Verbindung stehenden Verzahnung und einer Druckfluid-Steuereinrichtung zum Ansteuern der Bewegung des Verriegelungsteils.

Weitere Werkzeugrevolver gehen aus der DE 43 08 419 A1 und der JP 2004-025376 A hervor.

Ausgehend von diesem Stand der Technik stellt sich die Erfindung die Aufgabe, einen Werkzeugrevolver der eingangs genannten Gattung zur Verfügung zu stellen, der sich durch eine besonders sichere Verriegelung zwischen Revolverkopf und Gehäuse auszeichnet.

Erfindungsgemäß ist diese Aufgabe durch einen Werkzeugrevolver gelöst, der die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass im verriegelten Zustand neben der formschlüssigen Verbindung mittels einer Reibschlusseinrichtung eine zusätzliche Reibschlussverbindung zwischen dem Gehäuse und dem Revolverkopf hergestellt ist und dass die Reibschlusseinrichtung eine mit Druckfluid befüllbare Kammer zwischen dem Gehäuse und dem Revolverkopf aufweist, die außerhalb des möglichen Verzahnungseingriffs liegt und eine druckwirksame Fläche aufweist, die zwischen Gehäuse und Revolverkopf angeordnet ist, die bei Druckbeaufschlagung den Reibschluss herstellt. Dadurch, dass der Verriegelungseingriff durch den gleichzeitig wirksamen Reibschluss zusätzlich gesichert ist, erübrigen sich die beim Stand der Technik erforderlichen Maßnahmen, wie den Raumbedarf erhöhende Vergrößerung der Kolbenfläche des Verriegelungsteils und spezielle Zahnformen der Verzahnung, die den sicheren Verzahnungseingriff gefährden können. Bei geringem Raumbedarf und sicher durchführbaren Schaltvorgängen ist daher eine hohe Betriebssicherheit der Verriegelung erreichbar. Sofern hier der Begriff Revolverkopf verwendet wird, schließt dieser Begriff Werkzeugscheiben, insbesondere für Werkzeugrevolver von Werkzeugmaschinen zur spanenden Bearbeitung, mit ein.

Dabei kann die Anordnung mit besonderem Vorteil so getroffen sein, dass die mit Druckfluid befüllbare Kammer im verriegelten Zustand gleichfalls von der Druckfluid-Steuereinrichtung mit Druckfluid beaufschlagt ist. Dadurch verringert sich der bauliche Aufwand für im Gehäuse verlaufende Druckversorgungskanäle durch gemeinsame Versorgung des Verriegelungsteils und der Reibschlusseinrichtung.

Das Verriegelungsteil kann in der Art eines Druckkolbens ausgebildet sein, der auf gegenüberliegenden Flächen mit dem Druckfluid der Druckfluid-Steuereinrichtung beaufschlagbar ist. Dadurch erfolgt sowohl der Verriegelungseingriff als auch die Entriegelung druckgesteuert und besonders betriebssicher. Dabei können für die Druckversorgung der gegenüberliegenden Flächen des Verriegelungsteils voneinander getrennte Druckversorgungskanäle im Gehäuse verlaufen.

Bei besonders vorteilhaften Ausführungsbeispielen weist das Gehäuse eine nach außen vorspringende Führungsstufe auf, die von dem Revolverkopf randseitig übergriffen ist, wobei an der Stelle dieses Übergriffs zwischen dem Gehäuse und dem Revolverkopf die Kammer verläuft. Bei Beaufschlagung der Kammer mit dem Druckfluid ist dadurch der Reibschluss zwischen der Führungsstufe des Gehäuses und dem Revolverkopf ausbildbar.

Dabei kann die Anordnung mit besonderem Vorteil so getroffen sein, dass auf der Seite des Gehäuses, das seiner Verzahnung gegenüberliegt, die Kammer durch eine Begrenzung zwischen Revolverkopf und Gehäuse fortgeführt ist, die eine Wirkfläche bildet, die bei Druckbeaufschlagung den Revolverkopf in Richtung einer Stufenfläche der Führungsstufe zieht, die der Verzahnung des Revolverkopfes benachbart ist und die Reibfläche bildet.

Für die drehbare Lagerung des Revolverkopfes am Gehäuse kann auf der außenliegenden Führungsfläche der Führungsstufe des Gehäuses mindestens ein Lager angebracht sein, entlang dem der drehende Revolverkopf geführt ist, wobei auf dessen freier Stirnseite eine Werkzeugscheibe festlegbar ist, die eine Vielzahl von Werkzeugaufnahmen für die Aufnahme von Werkzeugen für die spanende Bearbeitung aufweist.

Nachstehend ist die Erfindung anhand eines in der Zeichnung dargestellten Ausführungsbeispiels im Einzelnen erläutert. Es zeigen:
- Fig. 1: einen unvollständig und schematisch vereinfacht dargestellten Längsschnitt eines Werkzeugrevolvers des Standes der Technik;
- Fig. 2: einen schematisch vereinfacht und abgebrochen gezeichneten Teillängsschnitt, in dem von einem Ausführungsbeispiel des erfindungsgemäßen Werkzeugrevolvers der der Verriegelungseinrichtung zwischen Gehäuse und Revolvertopf benachbarte Teilbereich dargestellt ist;
- Fig. 3: eine der Fig. 2 entsprechende Darstellung mit demgegenüber verdrehter Schnittebene; und
- Fig. 4: einen vergrößert gezeichneten Teilausschnitt aus Fig. 3.

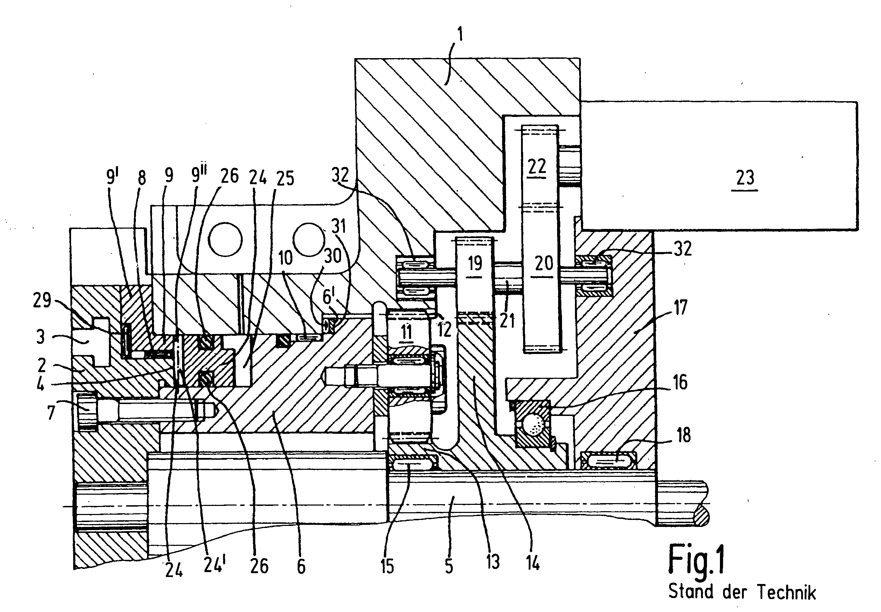

Die Fig. 1 zeigt den im Stand der Technik durch die DE 41 16 774 C1 bekannten Werkzeugrevolver, von dem im Folgenden nur die für diese Erfindung relevanten Teile beschrieben sind. Im Übrigen wird auf die DE 41 16 774 C1 Bezug genommen. Der Werkzeugrevolver weist einen drehbar in einem Revolvergehäuse 1 gelagerten Revolverkopf 2 auf, der in bekannter Weise mit Aufnahmen 3 für Werkzeugträger versehen ist. An der gegen das Innere des Revolvergehäuses 1 weisenden Seite des Revolverkopfes 2 ist ein Zahnkranz 4 vorgesehen, der konzentrisch zur Drehachse des Revolverkopfes 2 liegt und eine gegen das Innere des Revolvergehäuses 1 weisende Radialverzahnung bildet.

Der Drehantrieb des Revolverkopfes 2 für eine Drehung des letzteren in eine der wählbaren Winkelstellungen erfolgt bei dem gezeigten, bekannten Werkzeugrevolver nicht unmittelbar über eine zentral angeordnete Welle 5, sondern einen einen Abschnitt der Welle 5 konzentrisch umgebenden, hohlzylindrischen Körper 6, an dessen einer Stirnfläche der Revolverkopf 2 anliegt. Schrauben 7 verbinden den Revolverkopf 2 mit dem hohlzylindrischen Körper 6. Die den Zahnkranz 4 tragende, ringförmige Materialpartie des Revolverkopfes 2 ist an ihrer Außenmantelfläche über ein Lager 8 an einem Ring 9 abgestützt, der mit dem Revolvergehäuse 1 verbunden ist und einen sich radial nach außen erstreckenden Flansch 9 bildet. Über ein zweites Radiallager 10 ist der hohlzylindrische Körper 6 drehbar im Revolvergehäuse 1 gelagert.

Der Drehantrieb des hohlzylindrischen Körpers 6 erfolgt über ein Planetenrad 11, das neben seiner dem Revolverkopf 2 abgekehrten Stirnfläche an ihm drehbar gelagert ist. Dieses Planetenrad 11 kämmt sowohl mit einem am Revolvergehäuse 1 vorgesehenen Zahnkranz 12 als auch einem Ritzel 13, das eine gemeinsame Nabe mit einem axial neben ihm angeordneten Zahnrad 14 hat. Diese gemeinsame Nabe ist einerseits mittels eines Lagers 15 auf der Welle 5 und andererseits mittels eines Lagers 16 in einer Bohrung einer Stirnwand 17 des Revolvergehäuses 1 gelagert. In dieser Stirnwand 17 ist außerdem der hintere Endabschnitt der Welle 5 mittels eines Lagers 18 gelagert. Das Zahnrad 14 steht mit einem Ritzel 19 in Eingriff, das drehfest zusammen mit einem Zahnrad 20 auf einer parallel zur Welle 5 angeordneten Hilfswelle 21 angeordnet ist, die drehbar im Revolvergehäuse 1 und der Stirnwand 17 mittels Lager 32 gelagert ist. Mit dem Zahnrad 20 kämmt ein Ritzel 22, das auf der Welle eines Antriebsmotors 23 sitzt, welcher am Revolvergehäuse 1 und an dessen Stirnwand 17 festgelegt ist.

Der am Revolvergehäuse 1 festgelegte Ring 9 bildet einen zweiten Zahnkranz 9" in Form einer Radialverzahnung, deren Zähne eine radiale Verlängerung der Zähne 28 des Zahnkranzes 4 bilden, wenn diese auf die Zähne des zweiten Zahnkranzes 9" ausgerichtet sind.

Für die Zentrierung des Revolverkopfes 2 und seine Verriegelung in den wählbaren Winkelstellungen ist ein Verriegelungsteil in Form eines ringförmigen Kolbens 24 vorgesehen, dessen Innenmantelfläche mit der Innenmantelfläche des Zahnkranzes 4 und dessen Außenmantelfläche mit der Außenmantelfläche des zweiten Zahnkranzes 9" fluchtet, da beide Zahnkränze in den ringförmigen Arbeitsraum 25 von dessen einer Stirnseite her ragen, in dem der Kolben 24 axial verschiebbar angeordnet ist. Wie Fig. 1 zeigt, wird der ringförmige Arbeitsraum 25 innen und an dem dem Revolverkopf 2 abgekehrten Ende von einer nutförmigen Ausdrehung des hohlzylindrischen Körpers 6 und außen von der Innenmantelfläche des Revolvergehäuses 1 begrenzt.

Der Kolben 24, der sowohl in seiner Außenmantelfläche als auch seiner Innenmantelfläche mit je einer Ringnut zur Aufnahme je einer Ringdichtung 26 versehen ist, weist an der dem Zahnkranz 4 und dem zweiten Zahnkranz 9" zugewandten Stirnseite eine Radialverzahnung 24' auf, die korrespondierend zu den Verzahnungen der beiden Zahnkränze 4 und 9" ausgebildet ist, damit der Revolverkopf 2 exakt in jeder wählbaren Winkelposition positioniert und im Wesentlichen spielfrei mit dem Revolvergehäuse 1 verriegelt werden kann.

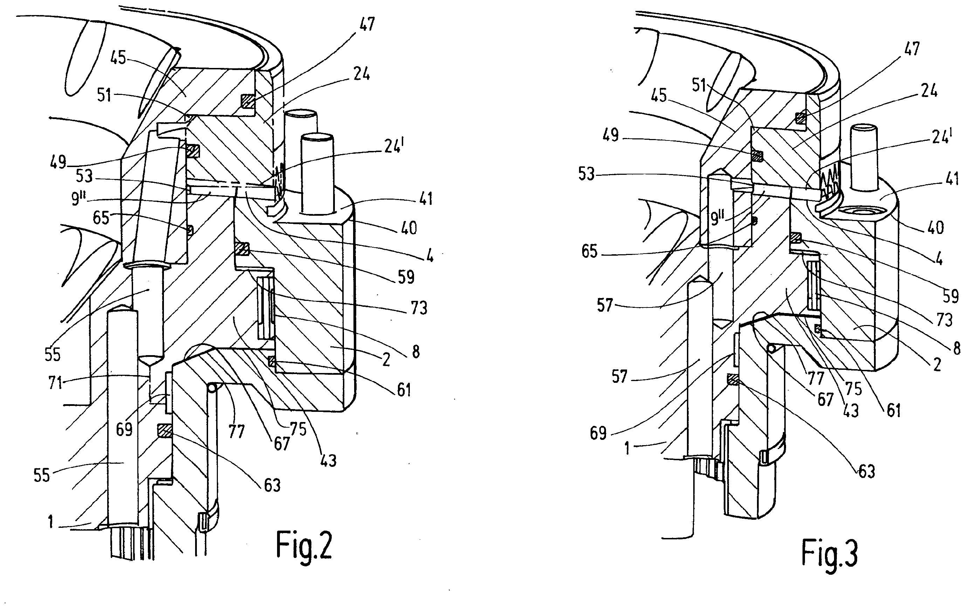

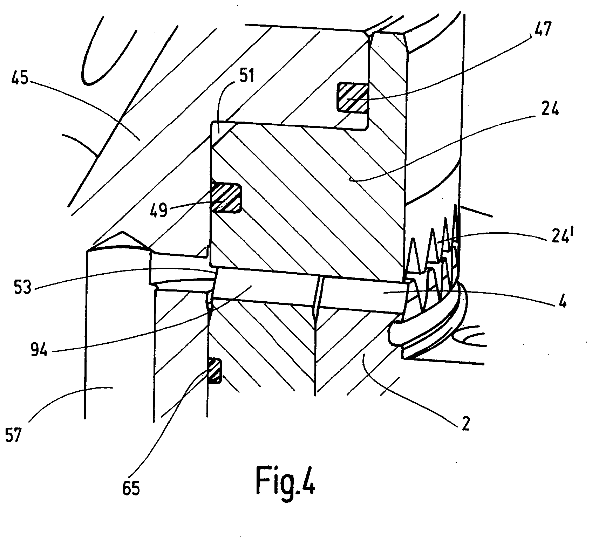

In den Figuren 2 bis 4 ist von einem Ausführungsbeispiel des erfindungsgemäßen Werkzeugrevolvers lediglich der der Verriegelungseinrichtung zwischen Gehäuse 1 und Revolverkopf 2 benachbarte Teilbereich dargestellt, wobei eine mit Aufnahmen für Werkzeugträger versehene Werkzeugscheibe weggelassen ist, die auf einer Anlagefläche 41 am äußeren Ringflansch 40 des Revolverkopfes 2 angebracht ist. Dieser übergreift eine sich vom Gehäuse 1 radial nach außen erstreckende Führungsstufe 43, an deren Außenumfang ein Radiallager 8 den Revolverkopf 2 bei seiner Drehbewegung um das Gehäuse 1 führt.

In den Figuren 2 bis 4 ist die Verriegelungseinrichtung jeweils in der Entriegelungsstellung gezeigt, bei der das Verriegelungsteil in Form des Druckkolbens 24 mit seiner Radialverzahnung 24' jeweils von der Verzahnung am Zahnkranz 4 des Revolverkopfes 2 und von der Verzahnung am Zahnkranz 9" des Gehäuses 1 abgehoben ist. Der Druckkolben 24 ist in einem eine Zylinderbuchse bildenden Ringkörper 45 des Gehäuses 1 verschiebbar und gegenüber diesem durch Dichtringe 47 und 49 abgedichtet, so dass auf beiden axial einander gegenüberliegenden Seiten des Kolbens 24 Druckräume 51 und 53 gebildet sind und der Kolben 24 daher durch Druckfluidzufuhr zwischen Entriegelungsstellung und Verriegelungsstellung verschiebbar ist. Fig. 2 zeigt die Verbindung eines im Gehäuse 1 verlaufenden Druckversorgungskanals 55 mit dem Druckraum 51. Die Fig. 3 zeigt die Verbindung eines zweiten Druckversorgungskanals 57 mit dem Druckraum 53 an der die Verzahnung 24' aufweisenden Seite des Kolbens 24.

Die Führungsstufe 43 des Gehäuses 1 ist mittels Dichtringen 59, 61 und 63 gegenüber dem Revolverkopf 2 und mittels eines Dichtringes 65 gegenüber dem Ringkörper 45 abgedichtet. Dadurch ist am Außenumfang der Führungsstufe 43 und des sich daran anschließenden Wandbereichs eine Druckkammer 67 ausbildbar, die über eine Tasche 69 und einen Abzweig 71 mit Druckfluid aus dem Versorgungskanal 55 beaufschlagbar ist, wenn die Druckfluid-Steuereinrichtung beim Schalten in den Verriegelungszustand den Versorgungskanal 55 mit Druckfluid versorgt. Bei der gezeigten Geometrie der Führungsstufe 43, bei der sich an die Stufenflächen 73 und 75 der Führungsstufe 43 eine schräge Begrenzungsfläche 77 des Revolverkopfes 2 anschließt, bildet diese Fläche 77 bei Druckbeaufschlagung der Druckkammer 67 eine druckwirksame Fläche, die am Revolverkopf 2 eine Kraftkomponente nach unten (Blickrichtung entsprechend der Zeichnungen) erzeugt, da sich die Druckwirksamkeit der einander entgegengesetzten Stufenflächen 73 und 75 aufhebt. Der Revolverkopf 2 wird dadurch gegen die obere Stufenfläche 73 der Führungsstufe 43 verspannt, so dass bei der Verriegelungsstellung unter Einfluss des Fluiddruckes ein Reibschluss an der Stufenfläche 73 zwischen Revolverkopf 2 und Führungsstufe 43 des Gehäuseteils 1 gebildet ist. Bei der so gebildeten zusätzlichen Verdrehsicherung erübrigen sich weitere Maßnahmen zur Sicherung des Eingriffs der Hirth-Verzahnungen, so dass kein Bauraum für Zusatzeinrichtungen erforderlich ist und die Zahnform der Hirth-Verzahnungen für optimalen Zahneingriff bei den Schaltvorgängen frei wählbar ist.

## Patentansprüche

1. Werkzeugrevolver mit
- einem Gehäuse (1),
- einem relativ zum Gehäuse (1) mittels eines Antriebes drehbaren Revolverkopf (2),
- zwei koaxial zur Drehachse des Revolverkopfes (2) angeordneten Zahnkränzen (4, 9"), von denen der eine (4) drehfest mit dem Revolverkopf (2) und der andere (9") drehfest mit dem Gehäuse (1) verbunden ist,
- einem relativ zum Gehäuse (1) und zum Revolverkopf (2) axial bewegbaren Verriegelungsteil (24) mit einer auf die beiden Zahnkränze (4, 9") ausgerichteten und in seiner Verriegelungsstellung mit diesen in Eingriff als formschlüssige Verbindung stehenden Verzahnung (24') und
- einer Druckfluid-Steuereinrichtung zum Ansteuern der Bewegung des Verriegelungsteils (24),
**dadurch gekennzeichnet, dass** im verriegelten Zustand neben der formschlüssigen Verbindung (4, 9", 24') mittels einer Reibschlusseinrichtung (67) eine zusätzliche Reibschlussverbindung (73) zwischen dem Gehäuse (1) und dem Revolverkopf (2) hergestellt ist und dass die Reibschlusseinrichtung eine mit Druckfluid befüllbare Kammer (67) zwischen dem Gehäuse (1) und dem Revolverkopf (2) aufweist, die außerhalb des möglichen Verzahnungseingriffs liegt und eine druckwirksame Fläche (73) aufweist, die zwischen Gehäuse (1) und Revolverkopf (2) angeordnet ist, die bei Druckbeaufschlagung den Reibschluss herstellt.

2. Werkzeugrevolver nach Anspruch 1, **dadurch gekennzeichnet, dass** die mit Druckfluid befüllbare Kammer (67) im verriegelten Zustand gleichfalls von der Druckfluid-Steuereinrichtung mit Druckfluid beaufschlagt ist.

3. Werkzeugrevolver nach Anspruch 1 oder 2, **dadurch gekennzeichnet, dass** das Verriegelungsteil in der Art eines Druckkolbens (24) ausgebildet ist, der auf gegenüberliegenden Flächen (51, 53) mit dem Druckfluid der Druckfluid-Steuereinrichtung beaufschlagbar ist.

4. Werkzeugrevolver nach Anspruch 3, **dadurch gekennzeichnet, dass** für die Druckversorgung der gegenüberliegenden Flächen (51, 53) des Verriegelungsteils (24) voneinander getrennte Druckversorgungskanäle (55, 57) im Gehäuse (1) verlaufen.

5. Werkzeugrevolver nach einem der vorstehenden Ansprüche, **dadurch gekennzeichnet, dass** das Gehäuse (1) eine nach außen vorspringende Führungsstufe (43) aufweist, die von dem Revolverkopf (2) randseitig übergriffen ist und dass an der Stelle dieses Übergriffes zwischen dem Gehäuse (1) und dem Revolverkopf (2) die Kammer (67) verläuft.

6. Werkzeugrevolver nach Anspruch 5, **dadurch gekennzeichnet, dass** auf der Seite des Gehäuses (1), das seiner Verzahnung (9") gegenüberliegt, die Kammer (67) durch eine Begrenzung zwischen Revolverkopf (2) und Gehäuse (1) fortgeführt ist, die eine Wirkfläche (77) bildet, die bei Druckbeaufschlagung den Revolverkopf (2) in Richtung einer Stufenfläche (73) der Führungsstufe (43) zieht, die der Verzahnung (4) des Revolverkopfes (2) benachbart ist.

7. Werkzeugrevolver nach Anspruch 5 oder 6, **dadurch gekennzeichnet, dass** auf der außenliegenden Führungsfläche der Führungsstufe (43) des Gehäuses (1) mindestens ein Lager (8) angebracht ist, entlang dem der drehende Revolverkopf (2) geführt ist.

8. Werkzeugrevolver nach einem der vorstehenden Ansprüche, **dadurch gekennzeichnet, dass** auf der freien Stirnseite (41) des Revolverkopfes (2) eine Werkzeugscheibe festlegbar ist mit einer Vielzahl von Werkzeugaufnahmen für die Aufnahme von Werkzeugen für die spanende Bearbeitung.

9. Werkzeugrevolver nach einem der vorstehenden Ansprüche mit einer Hirth-Verzahnungsvorrichtung mit zwei koaxial zueinander angeordneten Zahnkränzen (4, 9"), von denen der eine (9") drehfest und der andere (4) drehbar ist und mit einem ansteuerbaren Verriegelungsteil (24), dessen Zahnkranz (24') unter Bildung einer formschlüssigen Verbindung mit den anderen beiden Zahnkränzen (4, 9") verbindbar ist, **dadurch gekennzeichnet, dass** im verriegelten Zustand der einzelnen Zahnkränze (4, 9", 24') miteinander neben der formschlüssigen Verbindung mittels einer Reibschlusseinrichtung (67) eine zusätzliche Reibschlussverbindung (73) zwischen dem drehfesten (9") und dem drehbar geführten Zahnkranz (4) hergestellt ist.

## Claims

1. Tool turret having
- a housing (1),
- a turret head (2) rotatable with respect to the housing (1) by means of a drive,
- two gear rings (4, 9") arranged coaxially to the axis of rotation of the turret head (2), one (4) of which is non-rotatably connected to the turret head (2) and the other (9") of which is non-rotatably connected to the housing (1),
- a locking part (24) axially movable with respect to the housing (1) and the turret head (2), with a toothing (24') aligned with the two gear rings (4, 9") and in its locked position in engagement therewith as a form fit connection and
- a pressurised-fluid control device for controlling the movement of the locking part (24),
**characterised in that** in the locked state, in addition to the form fit connection (4, 9", 24'), an additional friction fit connection (73) is produced between the housing (1) and the turret head (2) by means of a friction fit device (67) and **in that** the friction fit device has a chamber (67), which can be filled with pressurised fluid, between the housing (1) and the turret head (2), which chamber is located outside the possible toothing engagement and has a pressure-active surface (73) which is arranged between housing (1) and turret head (2) and produces the friction fit when pressure is applied.

2. Tool turret according to claim 1, **characterised in that**, in the locked state, the pressurised-fluid control device likewise admits pressurised fluid to the chamber (67) which can be filled with pressurised fluid.

3. Tool turret according to claim 1 or 2, **characterised in that** the locking part is configured in the manner of a pressure piston (24) which can be acted upon on opposing surfaces (51, 53) by the pressurised fluid of the pressurised-fluid control device.

4. Tool turret according to claim 3, **characterised in that** separate pressure supply channels (55, 57) extend in the housing (1) to supply pressure to the opposing surfaces (51, 53) of the locking part (24).

5. Tool turret according to one of the preceding claims, **characterised in that** the housing (1) has an outwardly projecting guide step (43) which is overlapped on the rim side by the turret head (2) and **in that** the chamber (67) extends between the housing (1) and the turret head (2) at the point of this overlap.

6. Tool turret according to claim 5, **characterised in that**, on the side of the housing (1) which is opposite its toothing (9"), the chamber (67) is continued by a boundary between turret head (2) and housing (1) which boundary forms an active surface (77) which, when acted upon by pressure, pulls the turret head (2) towards a step surface (73) of the guide step (43) which is adjacent to the toothing (4) of the turret head (2).

7. Tool turret according to claim 5 or 6, **characterised in that** at least one bearing (8) is mounted on the outer guide surface of the guide step (43) of the housing (1), along which bearing the rotating turret head (2) is guided.

8. Tool turret according to one of the preceding claims, **characterised in that** a tool disc with a plurality of tool holders for holding tools for machining can be fixed on the free end face (41) of the turret head (2).

9. Tool turret according to one of the preceding claims having a Hirth toothing device with two gear rings (4, 9") arranged coaxially to each other, one (9") of which is non-rotatable and the other (4) of which is rotatable and having a controllable locking part (24), the toothing (24') of which can be connected, while forming a form fit connection, to the other two gear rings (4, 9"), **characterised in that** in the locked state of the individual gear rings (4, 9", 24') with each other, in addition to the form fit connection, an additional friction fit connection (73) is produced between the non-rotatably (9") and the rotatably guided gear ring (4) by means of a friction fit device (67).

## Revendications

1. Tourelle porte-outils comprenant
- une enveloppe (1),
- une tête (2) de tourelle tournante par rapport à l'enveloppe (1) au moyen d'un entraînement,
- deux couronnes (4, 9") dentées disposées coaxialement à l'axe de rotation de la tête (2) de la tourelle, dont l'une (4) est fixe en rotation avec la tête (2) de la tourelle et dont l'autre (9") est fixe en rotation avec l'enveloppe (1),
- une partie (24) de verrouillage mobile axialement par rapport à l'enveloppe (1) et à la tête (2) de la tourelle, ayant une denture (24') dirigée sur les deux couronnes (4, 9") dentées et, dans sa position de verrouillage, étant en prise avec celle-ci, sous la forme d'une liaison à complémentarité de forme et
- un dispositif de commande de fluide sous pression pour commander le déplacement de la partie (24) de verrouillage,
**caractérisée en ce que,** dans l'état verrouillé, outre la liaison (4, 9", 24') à complémentarité de forme, il est ménagé, au moyen d'un dispositif (67) agissant par frottement, une liaison (73) supplémentaire agissant par frottement entre l'enveloppe (1) et la tête (2) de la tourelle, et **en ce que** le dispositif agissant par frottement a, entre l'enveloppe (1) et la tête (2) de la tourelle, une chambre (67) pouvant être emplie d'un fluide sous pression, qui est à l'extérieur de la prise possible par denture et qui a une surface (73) efficace du point de vue de la pression disposée entre l'enveloppe (1) et la tête (2) de la tourelle, qui, lorsqu'elle est soumise à la pression, donne le frottement.

2. Tourelle porte-outils suivant la revendication 1, **caractérisée en ce que** la chambre (67) pouvant être emplie de fluide sous pression est, à l'état verrouillé, soumise au fluide sous pression également par le dispositif de commande de fluide sous pression.

3. Tourelle porte-outils suivant la revendication 1 ou 2, **caractérisée en ce que** la partie de verrouillage est constituée à la manière d'un piston (24) d'application d'une pression, qui peut être soumis sur des surfaces (51, 53) opposées au fluide sous pression du dispositif de commande de fluide sous pression.

4. Tourelle porte-outils suivant la revendication 3, **caractérisée en ce que**, pour l'alimentation en pression des surfaces (51, 53) opposées de la partie (24) de verrouillage, des conduits (55, 57) d'alimentation en pression séparés l'un de l'autre s'étendent dans l'enveloppe (1).

5. Tourelle porte-outils suivant l'une des revendications précédentes, **caractérisée en ce que** l'enveloppe (1) a un gradin (43) de guidage en saillie vers l'extérieur, qui est empiété du côté du bord par la tête (2) de la tourelle et **en ce qu'**à l'endroit de cet empiétement, la chambre (67) s'étend entre l'enveloppe (1) et la tête (2) de la tourelle.

6. Tourelle porte-outils suivant la revendication 5, **caractérisé en ce que**, du côté de l'enveloppe (1), qui est opposé à sa denture (9"), la chambre (67) se poursuit par une limitation entre la tête (2) et l'enveloppe (1), qui forme une surface (77) active qui, lors de l'alimentation en pression, tire la tête (2) de la tourelle en direction d'une surface (73) du gradin (43) de guidage, qui est voisine de la denture (4) de la tête de tourelle (2).

7. Tourelle porte-outils suivant la revendication 5 ou 6, **caractérisée en ce que**, sur la surface de guidage vers l'extérieur du gradin (43) de guidage de l'enveloppe (1), est mis au moins un palier (8), le long duquel la tête (2) de tourelle tournante est guidée.

8. Tourelle porte-outils suivant l'une des revendications précédentes, **caractérisée en ce que**, sur le côté (41) frontal libre de la tête (2) de la tourelle peut être fixé un disque à outil ayant une pluralité de logements à outils pour la réception d'outils pour l'usinage avec l'enlèvement de copeaux.

9. Tourelle porte-outils suivant l'une des revendications précédentes, comprenant un dispositif à denture Hirth ayant deux couronnes (4, 9") dentées disposées coaxialement l'une à l'autre, dont l'une (9") est fixe en rotation et dont l'autre (4) peut tourner et comprenant une partie (24) de verrouillage pouvant être commandée, dont la couronne (24') dentée peut, en formant une liaison à complémentarité de forme, être reliée aux deux autres couronnes (4, 9") dentées, **caractérisée en ce que**, à l'état verrouillé, les diverses couronnes (4, 9", 24') dentées les unes avec les autres, il est ménagé, donnent, outre la liaison à complémentarité de forme au moyen d'un dispositif (67) par frottement, une liaison (73) supplémentaire agissant par frottement entre la couronne (9") dentée fixe en rotation et la couronne (4) dentée tournante.
